# EUROPEAN PATENT APPLICATION

(11) **EP 2 378 801 A1**
(43) Date of publication of application: **19.10.2011**
(21) Application number: 10305392.2
(22) Date of filing: 15.04.2010
(51) Int. Cl.: H04W 12/06, H04L 29/08, H04L 29/06, H04W 84/04

(54) **System for accessing to a telecommunication network, the system including a telecommunication terminal installed in a vehicle**

(71) Applicant: Gemalto SA, 92190 Meudon (FR)
(72) Inventor: Lonkar, Anvay, 151076, SINGAPORE (SG)

(57) **Abstract**

The invention concerns a system for accessing to a telecommunication network.

The system includes a telecommunication terminal installed in a vehicle, the terminal being able to cooperate with a removable element belonging to a user, such as a card. The access of the terminal to the network is authorized only when a certificate included in the removable element is authenticated by the network.

According to the invention, the removable element is the electronic driving license of the user.

## Description

The present invention relates to a system for accessing to a telecommunication network, the system including a telecommunication terminal installed in a vehicle. The terminal is able to cooperate with a removable element belonging to a user, such as a card or a dongle, the access of the terminal to the network being authorized only when a digital key or certificate included in the removable element is authenticated by the network.

As described in US-2009260057, many automotive accidents are preventable if the vehicle driver is warned of a hazardous driving condition, or the vehicle itself reacts automatically to such a hazardous condition.

For example, a driver may cause a chain reaction accident by rapidly applying his or her brakes in order to avoid a collision. The drivers behind the vehicle are unable to brake sufficiently rapidly in order to avoid an accident thus resulting in a chain reaction accident. However, such an accident may theoretically be prevented, or at least the injuries and/or vehicular damages minimized, if the driver and/or vehicle potentially involved in the accident are able to react sufficiently rapidly to hazardous driving conditions in the vicinity.

For that reason, dedicated short range communications (DSRC) have been proposed to permit communication between automotive vehicles as well as vehicles and infrastructure for safety and other communications.

In managing the wireless communication between different vehicles, as well as between vehicles and infrastructure, the authenticity of the received messages is paramount. Without such authentications, the vehicles may receive wireless communications from parties who intentionally transmit incorrect information for whatever private purpose, as well as vehicles that, through malfunction, transmit incorrect information. Without authentication of the reliability of the received messages, unsafe traffic conditions, traffic congestion, etc. may result.

In order to enable automotive vehicles to communicate between themselves and optionally infrastructure, it has been proposed to form a vehicle ad hoc network (VANET) with the automotive vehicles that are within range of interest for the automotive vehicle and in which each automotive vehicle forms one node in the network. Such vehicles would then communicate amongst themselves within the network providing safety information, such as the status or status of operation of each vehicle in the network as well as infrastructure adjacent the road.

In order to ensure authenticity of the messages received by vehicle nodes within the network, it has been proposed to use public key infrastructure (PKI) authentication of messages transmitted over the ad hoc network. At the root of a PKI is a trusted Certificate Authority (CA). This certificate authority may be a government agency or its proxy. One of the responsibilities of a CA is to clearly distinguish between trusted and non-trusted nodes. To the trusted nodes, the CA gives one or more certificates (a single vehicle may use more than one certificate in order to improve its privacy) or digital keys. Each certificate imparts the trust of the CA to the owner of the certificate. A node V1 wanting to validate the authenticity of another node (V2)'s messages must have a certificate for V2. Certificates can be pre-installed or exchanged at the time of first meeting. Other certificate exchange methods have also been proposed. Node V1 can authenticate the validity of the certificate of V2. If V2's certificate is valid, V1 can then trust V2.

In one example, the certificate comprises (at least) a certificate ID, which for all practical purposes, also becomes a pseudonym for the certificate owner, as well as a public key associated with this certificate ID, as well as the certificate authority's digital signature binding this association.

In order to ensure the trustworthiness of inter-vehicle messages received within the VANET, it is necessary that a list of all certificates that have been revoked not only be maintained, but also rapidly propagated throughout the entire vehicle communication system which includes all of the VANETs.

One previously known proposal to accomplish this has been to provide roadside equipment (RSE) at numerous locations along the roads throughout the entire area encompassing the vehicle communication system, e.g. the United States. Such RSEs would transmit repeatedly a list identifying the certificate authentications or signatures that have been revoked by the certificate authority. This list would then be received by vehicles passing nearby the RSE and those vehicles would then update their list of certificate revocations so that any subsequent message received from a vehicle node having a revoked certificate will be disregarded.

The certificates are typically stored in a removable element such as a card or a dongle belonging to the driver of the vehicle. This card or dongle can be inserted in a telecommunication terminal installed in the car or inserted in a card or dongle reader connected to the telecommunication terminal. The access of the telecommunication terminal to the network is authorized only when the certificate included in the removable element is authenticated by the network.

The invention has the purpose to identify securely the sender of information in a telecommunication network, such as a VANET, thanks to its certificate, and to distribute, as a trusted CA (government body, vehicle association) the certificates that are required to secure the identity of the sender.

To this end, the invention proposes to store the certificate used to access the telecommunication network in the driving license of the driver of the vehicle. This means that the CA would be the driving license issuing authority.

As already mentioned, the telecommunication terminal installed in the vehicle cooperates then with the driving license of the user (driver) of the vehicle and the access of the terminal to the network is only authorized when the certificate included in the driving license is authenticated by the network.

Preferably, the telecommunication network is a VANET network or any network based on the 802.11 set of standards.

In another embodiment, the telecommunication network is a GSM, UMTS, WiFi, WiMax, Ad Hoc or LTE network.

Preferably, the telecommunication terminal is fixedly embarked in the vehicle.

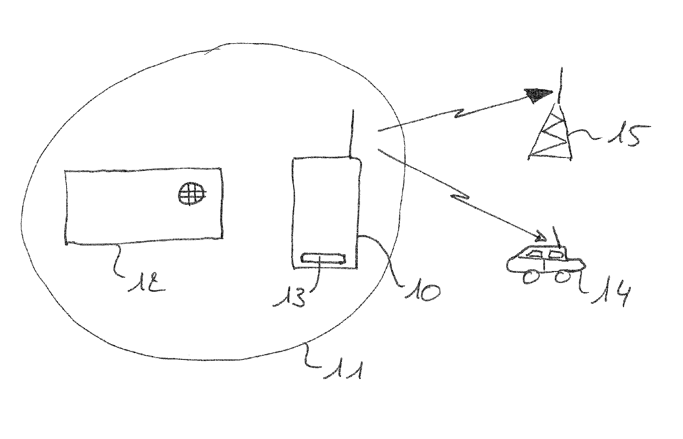

The present invention will now be described in reference of the accompanying unique figure representing a system according to the present invention.

In the unique figure, a system for accessing to a telecommunication network is represented. The system includes a telecommunication terminal 10 installed in a vehicle schematized by 11. Preferably, the terminal 10 is fixedly embarked in the vehicle 11. The terminal 10 is able to cooperate with a removable element 12 belonging to a user. This removable element 12 is, according to the invention, the electronic driving license of the user of the vehicle (i.e. the vehicle driver). It can be in the form of a chip card, with or without contacts, or in the form of a dongle, like a USB dongle. The cooperation between the terminal 10 and the removable element 12 can be obtained by inserting the element 12 in a slot 13 provided in the terminal 10. The terminal 10 comprises classical reading means of the content of the driving license 12 and is able to read a certificate that has been stored therein by the driving license issuing authority. The terminal 10 reads this certificate and sends it to the network comprising mobiles stations 14 and/or fixed stations 15 (RSE). These stations proceed to the authentication of the certificate. If the authentication is positive, the driver of vehicle 11 is authorized to communicate with them, otherwise not.

The telecommunication network constituted by the vehicles 11, 14 and the RSE 15 is typically a VANET network. It can also be any network based on the 802.11 set of standards.

In another embodiment, the telecommunication network is a GSM, UMTS, WiFi, WiMax, Ad Hoc or LTE network.

Thus, the system of the invention proposes to distribute the keys for security in the driving license of its owner and then use them for whatever applications as deemed necessary. Giving an example, if we want to identify someone who has broken a law, it is possible to identify this person by sending out his name and driving license ID in addition to the license plate number, all secured by the keys present in his driving license. Since this fact can be standardized by the application, which will have a module running on the vehicle, one running at a RSE and another module running at a server (typically at an authority) - it will know what data to expect from this message.

The driving license can also be used as a key for running the vehicle: without driving license, the vehicle would not start. In addition, an automatic connection to the telecommunication network can be established. This permits to detect easily law brokers since their certificates are broadcasted in the telecommunication network. It permits also to detect their position since RSEs can be installed in many places, for instance at road crossings.

With RSEs having a very small coverage, like micro-cells in the GSM system for example, it is possible to detect, with the help of radars, drivers who are driving too fast, to identify them thanks to their certificates and to send them directly fines. It is then no more possible to a driver to say to the police that someone else has committed the infraction since his certificate identifies him directly (it is no more possible for him to say that his grand-father for example was driving his vehicle).

The present invention also concerns a driving license comprising a certificate for accessing to a telecommunication network.

## Claims

1. A system for accessing to a telecommunication network, said system including a telecommunication terminal installed in a vehicle, said terminal being able to cooperate with a removable element belonging to a user, such as a card, the access of the said terminal to said network being authorized only when a certificate included in said removable element is authenticated by said network, **characterized in that** said removable element is the electronic driving license of the said user.

2. A system according to claim 1, wherein said telecommunication network is a VANet network or any network based on the 802.11 set of standards.

3. System according to claim 1, wherein said telecommunication network is a GSM, UMTS, WiFi, WiMax, Ad Hoc or LTE network.

4. System according to one of the claims 1 to 3, wherein said terminal is fixedly embarked in said vehicle.

5. Driving license comprising a certificate for accessing to a telecommunication network.
